# EUROPEAN PATENT SPECIFICATION

(11) **EP 1 232 969 B1**
(45) Date of publication and mention of the grant of the patent: **09.05.2007**
(21) Application number: 02003664.6
(22) Date of filing: 18.02.2002
(51) Int. Cl.: B65G 47/28

(54) **Device for equally spacing containers, in particular bottles**
Vorrichtung zum Anordnen von Behältern, insbesondere von Flaschen, in gleichen Abständen
Dispositif pour espacer à distances égales des récipients, notamment des bouteilles

(30) Priority: 20.02.2001 IT BO010093
(43) Date of publication of application: 21.08.2002
(73) Proprietor: PROCOMAC S.p.A., 43038 Sala Baganza (IT)
(72) Inventor: Vicini, Vittorio, 47023 Cesena (IT)
(74) Representative: Gotra, Stefano

(56) References cited:
- FR-A- 2 725 969
- US-A- 4 227 606

## Description

The present invention relates to a device for equally spacing containers, in particular, bottles according to the preamble of claim 1. Such a device is known from US-A-4 227 606.

Though the following description refers specifically to bottles, obvious steps may clearly be taken to apply the teachings of the present invention to any container or article, and in particular to any cylindrical or substantially cylindrical container.

In this type of application, the bottles are conveyed in single file, one against the other in an upright position on a chain conveyor, on which the bottoms of the bottles rest. The chain conveyor, which is powered so that it is synchronized with the speed of a machine downstream from the spacing device, e.g. a rinsing or filling machine, feeds the bottles to two superimposed screws for spacing the bottles before they are fed to an input conveyor of the downstream machine. The input conveyor normally comprises a substantially circular spoked wheel having a number of peripheral contoured pockets which, as the spoked wheel rotates about a vertical central axis, receive respective bottles from the screws.

The above devices as a whole are extremely expensive, are mechanically complicated, and necessarily call for changing the screws and the spoked wheel alongside variations in the shape and size of the bottles.

It is an object of the present invention to provide a device for equally spacing containers, in particular, bottles, designed to eliminate the aforementioned drawbacks, and which is simpler in design and relatively cheaper.

According to the present invention, there is provided a device for equally spacing containers, in particular, bottles, as claimed in the accompanying Claim 1.

It is a further object of the device according to the present invention to avoid the use of screws and spoked conveyors specially designed for specific bottle diameters, and to enable the spacing of bottles of different shapes and sizes with no need for retooling, thus reducing cost in terms of tooling and retooling time.

A non-limiting embodiment of the present invention will be described by way of example with reference to the accompanying drawings, in which:
Figure 1 shows a plan view of a device in accordance with the teachings of the present invention, and in the process of spacing containers with first dimensional characteristics;
Figure 2 shows a plan view of the Figure 1 device in the process of spacing containers with second dimensional characteristics;
Figure 3 shows a larger-scale section of the device, with parts removed for clarity, along line III-III in Figure 1;
Figure 4 shows a larger-scale section, with parts removed for clarity, along line IV-IV in Figure 1.

With reference to the accompanying drawings, number 1 indicates as a whole a device for equally spacing cylindrical containers 2, in particular, bottles 2, which are fed along a path P and in a feed direction A by a chain conveyor 3, on which the bottles travel in an upright position in a single line F, initially contacting each other, and with their bottoms resting on the conveyor.

Bottles 2 are fed by conveyor 3 to an unloading station 4, where they are gripped for transfer to further processing stations (not shown) by a known transfer device 5 at the input of a machine M downstream from conveyor 3. As they travel along conveyor 3, bottles 2 are guided and held upright by two known lateral guide members 6, which can be moved with respect to each other in a direction B crosswise to direction A to adjust the relative position of guide members 6 according to the size of bottles 2. Prior to, and to permit, removal by transfer device 5, bottles 2 are equally spaced and timed with respect to transfer device 5 along a portion of path P.

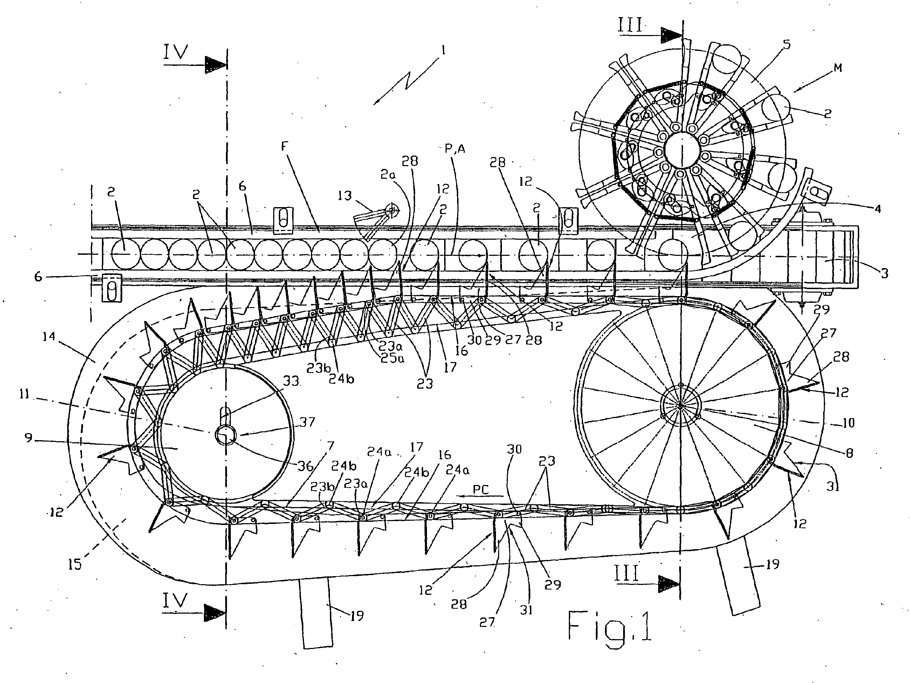

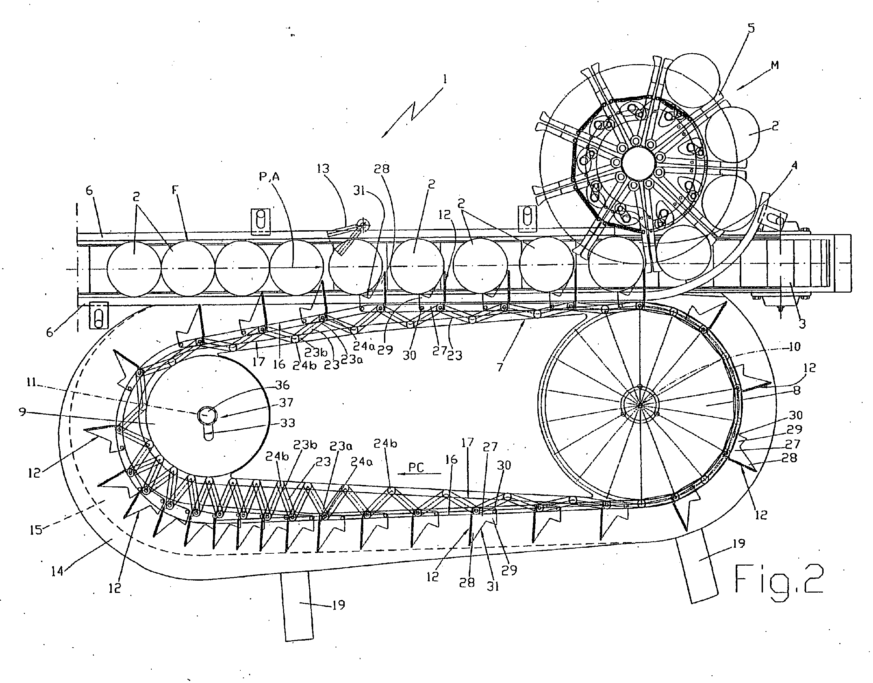

Device 1 for equally spacing bottles 2 comprises an articulated chain 7 traveling along an endless annular path PC and looped about respective peripheral portions of a powered toothed wheel 8 and a transmission wheel 9, which rotate about respective axes 10 and 11 parallel to each other, perpendicular to the Figure 1 and 2 plane, crosswise to direction A, and spaced a given distance apart.

Chain 7 is fitted with a number of retaining members 12 equally spaced along chain 7, and each of which is inserted between two adjacent, initially contacting bottles 2, and retains each bottle 2 to separate it, along a portion of path P, from the adjacent bottles 2. For which purpose, retaining members 12 travel at a slower speed than conveyor 3; and, to prevent retaining members 12 from interfering with the first bottle 2a in line F, device 1 is equipped with a clamping member 13 adjacent to first bottle 2a, and which is activated at the start of each cycle to release line F of bottles 2 in time with the insertion of retaining members 12.

Device 1 comprises two parallel, facing plates 14 and 15 perpendicular to axes 10 and 11, between which wheels 8 and 9 are located, and which have respective annular grooves 16 and 17 facing each other and defining respective cams.

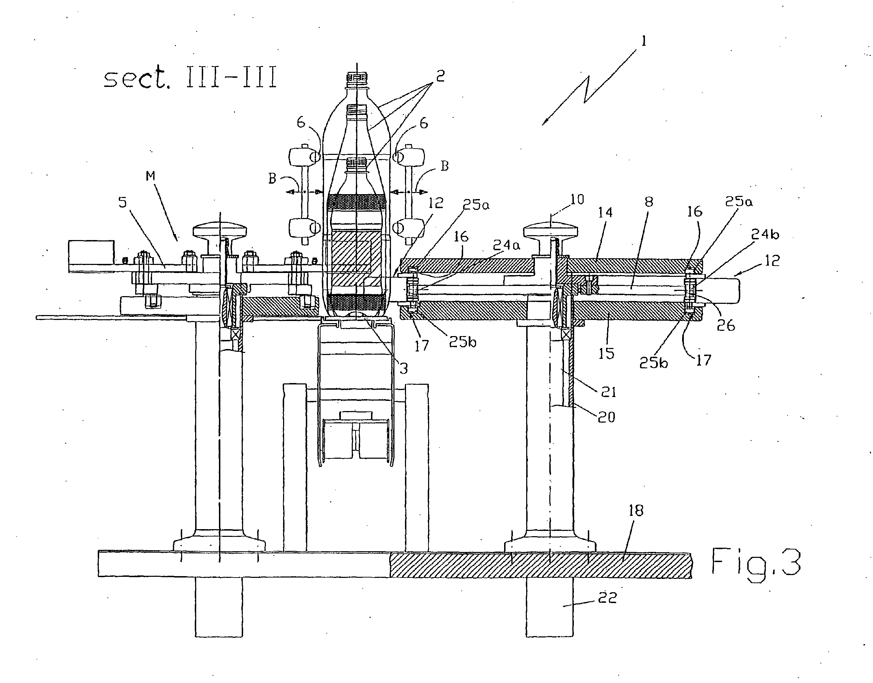

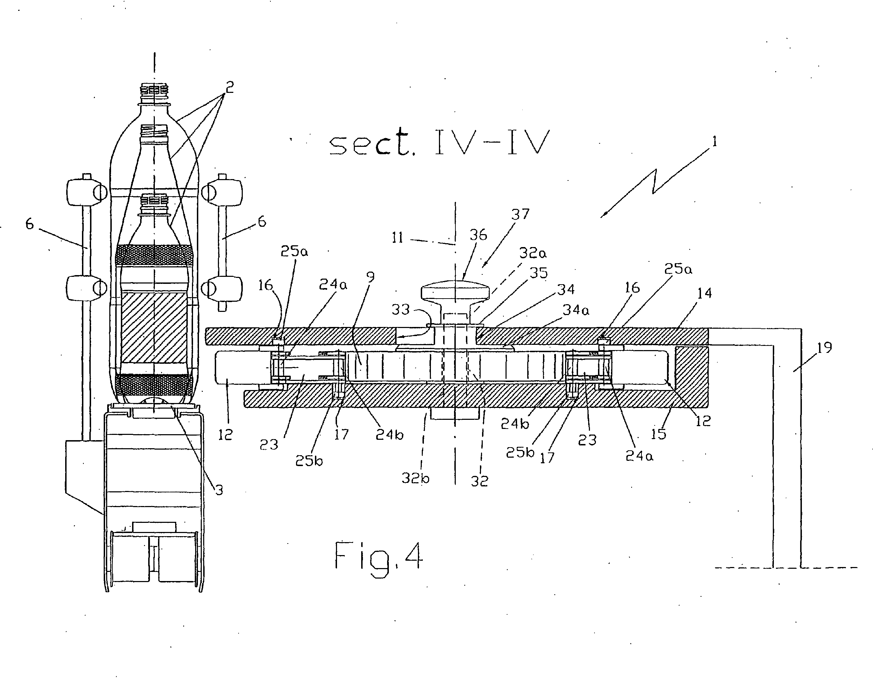

As shown more clearly in Figures 3 and 4, plate 14, which is located over plate 15, is a fixed plate supported over a base 18 by supporting brackets 19 (Figures 1, 2 and 4). As shown more clearly in Figure 3, both plates 14, 15 and toothed wheel 8 are supported over base 18 by a vertical tubular member 20 coaxial with axis 10 and connected integrally to base 18; and the bottom plate 15 is fitted to tubular member 20 so as to be movable angularly with respect to axis 10.

Toothed wheel 8 is fitted in known manner to a vertical shaft 21, which is housed inside tubular member 20, is coaxial with axis 10, and is rotated by a motor 22 located underneath base 18 and connected to shaft 21 in known manner not shown.

Chain 7 comprises a succession of links 23, the ends 23a and 23b of each of which have respective through holes engaged by respective hinge pins 24 - indicated 24a and 24b respectively - which extend parallel to axes 10 and 11 and connect link 23 to respective adjacent links 23.

The top end of each pin 24a is fitted with a tappet roller 25a which, in use, engages groove 16 in top plate 14; and the bottom end of each pin 24b is fitted with a tappet roller 25b which, in use, engages groove 17 in bottom plate 15.

In use, each pin 24 engages a respective cavity 26 in toothed wheel 8, which thus transmits motion to chain 7.

As shown in Figures 1 and 2, each retaining member 12 comprises a rocker arm 27 hinged to chain 7 at a respective pin 24a. Rocker arm 27 comprises a first arm 28 which is inserted between two adjacent bottles 2 and retains the rear bottle 2 in feed direction A; and a second arm 29 connected to an antirotation pin 30 which is parallel to relative pin 24a, is located behind pin 24a in feed direction A, and, like pin 24a, is connected, in use, to groove 16 by a tappet roller (not shown). First arm 28 is connected to second arm 29 to form a substantially L-shaped seat 31 for partly housing a respective bottle 2.

As shown clearly in Figure 4, like wheel 8, wheel 9 is also located between plates 14 and 15, and is fitted to top plate 14 by a central pin 32 to which it is fitted in rotary manner. Pin 32 is coaxial with axis 11 and, at a first end 32a, is housed inside a through opening 33 in top plate 14, and, at a second end 32b, is connected integrally to bottom plate 15.

Pin 32 comprises a collar 34 connected integrally to pin 32 and having, at one end, an annular flange 34a interposed between wheel 9 and plate 14 and radially larger than opening 33.

The top end 32a of pin 32 is threaded, and is fitted, with the interposition of a washer 35 radially larger than opening 33, with a knob 36, which is screwed on to end 32a to bring washer 35 and flange 34a closer together and so lock pin 32 in position along opening 33.

As explained in more detail later on, pin 32 and opening 33 together define a device 37 for adjusting the distance between retaining members 12.

In actual use, chain 7 is moved along endless path PC by toothed wheel 8, by virtue of hinge pins 24, as stated, engaging respective cavities 26 on toothed wheel 8. As chain 7 moves along, pins 24a engage groove 16 by means of respective tappet rollers 25a, and pins 24b, which alternate with pins 24a, engage groove 17 by means of respective tappet rollers 25b, so that links 23 are more or less aligned with one another depending on the lesser or, respectively, greater distance between grooves 16 and 17, and retaining members 12 are spaced further or closer apart.

In the event of a change in the shape and size of bottles 2 on conveyor 3, to ensure retaining members 12 engage respective bottles 2 at the right distance, the cam defined by groove 17 need simply be moved with respect to the cam defined by groove 16. This is done by at least partly unscrewing knob 36 to release pin 32, and by moving pin 32 along opening 33 into a new position - thus moving plate 15 angularly about axis 10 - which is locked by retightening knob 36.

The above angular displacement moves grooves 16 and 17 closer together or further apart. For example, starting with the configuration shown in Figure 1, when grooves 16 and 17 are moved closer together towards conveyor 3, links 23 of chain 7 tend to align with one another, and the distance between two pins 24a - and therefore the distance between two adjacent retaining members 12 - increases, so that, as shown in Figure 2, device 1 is able to space larger bottles 2 than in the Figure 1 configuration.

As will be clear from the foregoing description, device 1 according to the present invention is extremely versatile, and can be adjusted easily to space bottles 2 of different shapes and sizes, with no need to retool device 1 at each changeover.

## Claims

1. A device for equally spacing containers (2), in particular bottles, fed by conveying means (3) along a given path (P) and in a given feed direction (A), and comprising a number of retaining members (12) for engaging and equally spacing individual containers (2) along at least a portion of said path (P); the device (1) comprising flexible means (7) to which said retaining members (12) are fitted, said flexible means (7) comprising an articulated chain (7) defined by links (23), moving along an endless path (PC), and comprising a number of hinge pins (24) between said links (23) and first (16) and second (17) cam means engaged by first pins (24a) and, respectively, second pins (24b) alternating with said first pins (24a) along said articulated chain (7); adjusting means (37) associated with said first and second cam means (16, 17) to adjust a position of said second cam means (17) with respect to said first cam means (16), and so adjust the distance between said retaining members (12) to enable them to space containers (2) of different sizes; a powered toothed wheel (8) and a transmission wheel (9), which are mounted to rotate respectively about a first axis (10) and a second axis (11), both perpendicular to said feed direction (A); said articulated chain (7) is looped about respective peripheral portions of said toothed wheel (8) and said transmission wheel (9); each said pin (24) engaging, in use, a cavity (26) on said toothed wheel (8).

2. A device as claimed in claim 1 **characterized in that** each said pin (24) is fitted at one end with a tappet (25); and **in that** the tappets (25a) carried by respective said first pins (24a) are located on the opposite side to the tappets (25b) carried by respective said second pins (24b); two plates (14, 15) facing and parallel to each other, and perpendicular to said first (10) and second (11) axis; each said plate (14, 15) having an annular groove (16, 17) facing the annular groove (17, 16) in the other plate (15, 14); and said first (16) and second (17) cam means respectively comprising one of said annular grooves (16, 17), **characterized in that** said adjusting means (37) comprises a through opening (33) formed in said first plate (14) and an adjusting pin (32), which is connected integrally to said second plate (15), extending through said opening (33), and is moved along said opening (33) and parallel to said first axis (10) to adjust the relative position of said first (14) and said second (15) plate, and consequently of said first (16) and said second (17) cam means, said toothed wheel (8) and said transmission wheel (9) being located between said plates (14, 15), said transmission wheel (9) being fitted to rotate about said adjusting pin (32), whereby actuating means (22) are connected to said toothed wheel (8) to move said articulated chain (7) along said endless path (PC).

3. A device as claimed in claim 1 or 2, wherein a first plate (14) is a fixed plate, and a second plate (15) is movable angularly about said first axis (10) with respect to said first plate (14).

4. A device as claimed in any one of the foregoing claims, **characterized in that** said retaining members (12) are connected respectively to said first pins (24a).

5. A device as claimed in any one of the foregoing claims, **characterized in that** each said retaining member (12) comprises a rocker arm (27); said rocker arm (27) being hinged respectively to said articulated chain (7) at said first pin (24a), and comprising a first arm (28) and a second arm (29); said first (28) and said second (29) arm being connected to each other to form a substantially L-shaped seat (31) for partly housing a respective container (2) in use.

6. A device as claimed in claim 5, **characterized in that** said first arm (28) is inserted, in use, between two adjacent containers (2), and retains the rear container (2) in said feed direction (A); and **in that** said second arm (29) is hinged to an antirotation pin (30), which is parallel to a respective first pin (24a), is located behind said first pin (24a) in said feed direction (A), and is connected, in use, to said first cam means (16).

## Patentansprüche

1. Vorrichtung zum Anordnen von Behältern (2), insbesondere von Flaschen, in gleichen Abständen, die von Fördermitteln (3) entlang einer vorgegebenen Bahn (P) und in einer vorgegebenen Zufuhrrichtung (A) zugeführt werden, umfassend ferner eine Vielzahl von Halteelementen (12), welche zumindest entlang einem Teil der genannten Bahn (P) an einzelnen Behältern (2) angreifen und diese in gleichen Abständen anordnen; wobei die Vorrichtung (1) Federmittel (7) umfasst, an denen die genannten Halteelemente (12) befestigt sind, und diese Federmittel (7) eine aus Gliedern (23) bestehende Gelenkkette (7) umfassen, welche sich entlang einer umlaufenden Bahn (PC) bewegt und eine Vielzahl von Gelenkzapfen (24) zwischen den genannten Gliedern (23) umfasst, sowie erste (16) und zweite (17) Nockenmittel, an denen erste (24a) bzw. zweite Zapfen (24b) angreifen, die entlang der genannten Gelenkkette (7) abwechselnd zu den ersten Zapfen (24a) angeordnet sind; den genannten ersten und zweiten Nockenmitteln (16, 17) zugeordnete Regulierungsmittel (37) zur Einstellung einer Position der genannten zweiten Nockenmittel (17) gegenüber den genannten ersten Nockenmitteln (16) und damit des Abstands zwischen den genannten Haltemitteln (12), wodurch diese Behälter (2) verschiedener Grösse beabstanden können; ein angetriebenes Zahnrad (8), sowie ein Umlenkrad (9), welche Räder jeweils um eine erste Achse (10) und eine zweite Achse (11) drehbar angeordnet sind, welche Achsen beide senkrecht zu der genannten Zufuhrrichtung (A) liegen; wobei die genannte Gelenkkette (7) jeweils über Randbereiche des Zahnrades (8) und des Umlenkrades (9) geführt ist und die genannten Zapfen (24) während des Betriebs jeweils in eine Lücke (26) des genannten Zahnrades (8) eingreifen; zwei parallele und einander gegenüberliegende Platten (14, 15), die sich senkrecht zu der ersten (10) und zweiten Achse (11) erstrecken, welche Platten (14, 15) jeweils eine der Ringnut (17, 16) der jeweils anderen Platte (15, 14) gegenüberliegende Ringnut (16, 17) aufweisen, und die ersten (16) und zweiten Nockenmittel (17) jeweils eine der genannten Ringnuten (16, 17) umfassen, **dadurch gekennzeichnet, dass** die genannten Regulierungsmittel (37) eine Durchgangsöffnung (33) umfassen, welche in der genannten ersten Platte (14) ausgebildet ist, sowie einen einstückig mit der zweiten Platte (15) ausgebildeten Regulierungsstift (32), der sich durch die genannten Öffnung (33) erstreckt und sich zur Einstellung der Relativposition der ersten (14) und der zweiten Platte (15), und folglich der ersten (16) und der zweiten Nockenmittel (17), entlang der genannten Öffnung (33) und parallel zu der ersten Achse (33) bewegt, wobei das genannte Zahnrad (8) und das Umlenkrad (9) zwischen den genannten Platten (14, 15) und das Umlenkrad (9) drehbar um den Regulierungsstift (32) angeordnet ist und Stellmittel (22) mit dem Zahnrad (8) verbunden sind, um die Gelenkkette (7) entlang der umlaufenden Bahn (PC) zu bewegen.

2. Vorrichtung nach Anspruch 1, **dadurch gekennzeichnet, dass** die Zapfen (24) an ihrem einen Ende jeweils einen Stössel (25) aufweisen und die jeweils von den genannten ersten Zapfen (24a) getragenen Stössel (25a) gegenüber den von den genannten zweiten Zapfen (24b) getragenen Stösseln (25b) angeordnet sind.

3. Vorrichtung nach Anspruch 1 oder 2, bei der eine erste Platte (14) feststehend und eine zweite Platte (15) winkelmässig gegenüber der ersten Platte (14) um die genannte erste Achse (10) bewegbar ist.

4. Vorrichtung nach einem der vorhergehenden Ansprüche, **dadurch gekennzeichnet, dass** die Haltemittel (12) jeweils mit den ersten Zapfen (24a) verbunden sind.

5. Vorrichtung nach einem der vorhergehenden Ansprüche, **dadurch gekennzeichnet, dass** die Haltemittel (12) jeweils einen Kipphebel (27) umfassen, wobei dieser Kipphebel (27) jeweils in Höhe des erstens Zapfens (24a) an der genannten Gelenkkette (7) angelenkt ist und einen ersten Arm (28) und einen zweiten Arm (29) umfasst, wobei der erste (28) und der zweite Arm (29) derart miteinander verbunden sind, dass ein im wesentlichen L-förmiger Sitz (31) zur teilweisen Aufnahme eines entsprechenden Behälters (2) im Betrieb ausgebildet wird.

6. Vorrichtung nach Anspruch 5, **dadurch gekennzeichnet, dass** der erste Arm (28) im Betrieb zwischen zwei nebeneinander liegende Behälter (2) tritt und den in der genannten Zufuhrrichtung (A) hinteren Behälter (2) zurückhält; und dass der zweite Arm (29) an einem parallel zu dem ersten Zapfen (24a) angeordneten Drehsicherungsstift (30) angelenkt, in Zufuhrrichtung (A) gesehen hinter dem genannten ersten Zapfen (24a) angeordnet und im Betrieb mit den genannten ersten Nockenmitteln (16) verbunden ist.

## Revendications

1. Dispositif pour espacer à distances égales des récipients (2), en particulier des bouteilles, alimentés par des moyens de convoyage (3) le long d'un parcours (P) déterminé et dans une direction d'alimentation (A) déterminée, et comprenant un nombre d'éléments de préhension (12) pour engager et espacer à distances égales des récipients (2) individuels le long d'au moins une portion dudit parcours (P); le dispositif (1) comprenant des moyens flexibles (7) sur lesquels lesdits éléments de préhension sont fixés, lesdits moyens flexibles (7) comprenant une chaine articulée (7) définie par des mailles (23), se déplaçant le long d'un parcours sans fin (PC), et comprenant un nombre d'axes d'articulation (24) entre lesdites mailles (23) et de premiers (16) et seconds (17) moyens à came engagés par les premiers axes (24a) et, respectivement, les seconds axes (24b) alternés aux dits premiers axes (24a) le long de ladite chaine articulée (7); des moyens de réglage (37) associés aux dits premiers et seconds moyens à came (16, 17) pour régler une position desdits seconds moyens à came (17) par rapport aux dits premiers moyens à came (16), et pour régler la distance entre lesdits éléments de préhension (12) pour leur permettre d'espacer les récipients (2) de différentes dimensions; une roue dentée motorisée (8) et une roue de transmission (9), qui sont montées pour pivoter respectivement autour d'un premier axe (10) et d'un second axe (11), tous deux perpendiculaires à ladite direction d'alimentation (A); ladite chaine articulée (7) est enroulée autour des respectives portions périphériques de ladite roue dentée (8) et de ladite roue de transmission (9); chacun desdits axes (24) engageant, en utilisation, une cavité (26) sur ladite roue dentée (8); deux plaques (14, 15) opposées et parallèles entre elles, et perpendiculaires aux dits premiers (10) et seconds axes (11); chacune des dites plaques (14, 15) ayant une rainure annulaire (16, 17) faisant face à la rainure annulaire (17, 16) dans l'autre plaque (15, 14); et lesdits premiers (16) et seconds (17) moyens à came comprenant respectivement une des dites rainures annulaires (16, 17), **caractérisé en ce que** lesdits moyens de réglage (37) comprennent une ouverture passante (33) formée dans ladite première plaque (14) et un axe de réglage (32), connecté en partie intégrante à ladite seconde plaque (15), s'étendant au travers de ladite ouverture (33), et étant déplacé le long le ladite ouverture (33) et parallèlement au dit premier axe (10) pour régler la position relative de ladite première (14) et ladite seconde plaque (15), et en conséquence desdits premiers (16) et desdits seconds (17) moyens à came, ladite roue dentée (8) et ladite roue de transmission (9) étant situées entre lesdites plaques (14, 15), ladite roue de transmission (9) étant installée pour pivoter autour dudit axe de réglage (32), des moyens d'actionnement (22) étant connectés à ladite roue dentée (8) pour déplacer ladite chaine articulée (7) le long dudit parcours sans fin (PC).

2. Dispositif selon la revendication 1, **caractérisé en ce que** chacun desdits axes (24) est pourvu sur une de ses extrémités d'un poussoir (25); et **en ce que** les poussoirs (25a) portés par lesdits respectifs premiers axes (24a) sont disposés sur les côtés opposés aux poussoirs (25b) portés par lesdits respectifs seconds axes (24b).

3. Dispositif selon la revendication 1 ou 2, dans lequel une première plaque (14) est une plaque fixe, et une seconde plaque (15) est mobile angulairement autour d'un premier axe (10) par rapport à ladite première plaque (14).

4. Dispositif selon n'importe laquelle des revendications précédentes, **caractérisé en ce que** les éléments de préhension (12) sont connectés aux dits premiers axes (24a).

5. Dispositif selon n'importe laquelle des revendications précédentes, **caractérisé en ce que** chaque élément de préhension (12) comprend un culbuteur (27); ledit culbuteur (27) étant articulé respectivement à ladite chaine articulée (7) en correspondance dudit premier axe (24a), et comprenant un premier bras (28) et un second bras (29); lesdits premier (28) et second (29) bras étant connectés entre eux pour former un logement substantiellement en forme de L (31) pour accueillir partiellement un respectif récipient (2) en utilisation.

6. Dispositif selon la revendication 5, **caractérisé en ce que** ledit premier bras (28) est inséré, en utilisation, entre deux récipients adjacents (2), et retient le récipient (2) dans ladite direction d'alimentation (A); et **en ce que** ledit second bras (29) est articulé en correspondance d'un axe antirotation (30), parallèle à un respectif premier axe (24a), est disposé derrière ledit premier axe (24a) dans ladite direction d'alimentation (A), et est connecté en utilisation aux dits premiers moyens à came (16).
